# EUROPEAN PATENT APPLICATION

(11) **EP 2 835 796 A2**
(43) Date of publication of application: **11.02.2015**
(21) Application number: 14178673.1
(22) Date of filing: 28.07.2014
(51) Int. Cl.: G09G 5/26, G06F 17/21, G06F 17/22, G06F 9/44, G06F 17/30, G06T 3/40, G06T 11/60, G06F 3/14, G09G 5/22

(54) **Information processing apparatus, programmable display apparatus, data processing method, and program**

(30) Priority: 09.08.2013 JP 2013166242
(71) Applicant: OMRON CORPORATION, Kyoto, Kyoto 600-8530 (JP)
(72) Inventor: Ishihara, Hiromi, Kyoto, Kyoto 600-8530 (JP); Kawakami, Fumio, Kyoto, Kyoto 600-8530 (JP)
(74) Representative: Horn Kleimann Waitzhofer

(57) **Abstract**

Provided is an information processing apparatus that can improve the visibility of characters on a programmable display apparatus. A PC, which is an information processing apparatus, stores a character string and display area information indicating a size of a predetermined display area. The PC calculates, based on the display area information, a degree of visibility of characters for a case in which the character string is displayed in the display area using a first display format that displays all of the characters in the same size in a single line, and a degree of visibility of the characters for a case in which the character string is displayed in the display area using a second display format that displays all of the characters in the same size in a plurality of lines. The PC transmits, to the programmable display apparatus, in association with one another, the character string, the display area information, and attribute information for displaying the character string on the programmable display apparatus using the one of the first and second display formats that has a higher degree of visibility.

## Description

### FIELD

The present invention relates to an information processing apparatus, a programmable display apparatus, a data processing method, and a program. In particular, the invention relates to an information processing apparatus communicably connected to a programmable display apparatus, a programmable display apparatus communicably connected to a programmable logic controller, a data processing method used in an information processing apparatus, a data processing method used in a programmable display apparatus, a program for controlling an information processing apparatus, and a program for controlling a programmable display apparatus.

### BACKGROUND

Conventionally, a programmable display apparatus that is communicably connected to a programmable logic controller (hereinafter also referred to as "PLC") is known. Also known is an operation screen generation apparatus for a programmable display apparatus that enables a display operation corresponding to a change in data of a PLC on an operation screen.

JP 2000-194472A discloses a configuration of the foregoing operation screen generation apparatus including a character string display unit, a character string input unit, and a character string storage unit. The character string display unit extracts character strings to be displayed on an operation screen, and displays the character strings on the screen in such a manner that their respective contents are identifiable. In correspondence with the displayed character strings, the character string input unit enables input of character strings that correspond in contents to the displayed character strings and are in a language different from a language of the displayed character strings. The character string storage unit enables character strings in different languages to be stored as an individual character string file while maintaining a correspondence relationship thereamong.

JP 2000-194472A is an example of background art.

### SUMMARY

While the operation screen generation apparatus according to JP 2000-194472A enables display of characters in a plurality of languages, it does not take into consideration a technique to improve the visibility of characters. The invention of the present application has been made in view of the above problem. It is an object thereof to provide an information processing apparatus that can improve the visibility of characters on a programmable display apparatus, a programmable display apparatus, a data processing method, and a program.

An information processing apparatus according to one aspect of the invention is communicably connected to a programmable display apparatus. The information processing apparatus includes: a storage unit that stores a first character string and display area information indicating a size of a predetermined display area; a calculation unit that calculates, based on the display area information, a degree of visibility of characters for a case in which the first character string is displayed in the predetermined display area using a first display format, and a degree of visibility of the characters for a case in which the first character string is displayed in the predetermined display area using a second display format, the first display format displaying all of the characters in the same size in a single line, and the second display format displaying all of the characters in the same size in a plurality of lines; and a transmission unit that transmits, in association with one another, the first character string, the display area information, and first attribute information to the programmable display apparatus, the first attribute information being for displaying the first character string on the programmable display apparatus using the one of the first display format and the second display format that has a higher degree of visibility.

It is preferable that the degrees of visibility of the characters are character sizes. The first attribute information includes first size information indicating a character size calculated by the calculation unit.

It is preferable that, if the one of the first display format and the second display format that has the higher degree of visibility is the second display format, the first attribute information further includes position information designating a line feed position in the first character string.

It is preferable that the first character string is composed of one or more words. The one or more words are composed of one or more characters. The calculation unit calculates a character size of the first character string for the second display format on the condition that a word composed of a plurality of characters is displayed in the same line.

It is preferable that the first character string is a character string in a first language. The storage unit further stores a second character string that is a translation of the first character string in a second language. The calculation unit further calculates, based on the display area information, a degree of visibility of characters for a case in which the second character string is displayed in the predetermined display area using the first display format, and a degree of visibility of the characters for a case in which the second character string is displayed in the predetermined display area using the second display format. The transmission unit further transmits the second character string and second attribute information to the programmable display apparatus in correspondence with the display area information, the second attribute information being for displaying the second character string on the programmable display apparatus using the one of the first display format and the second display format that has a higher degree of visibility. The degrees of visibility of the characters are character sizes of the second character string. The second attribute information includes second size information indicating a character size of the second character string calculated by the calculation unit.

It is preferable that, if the one of the first display format and the second display format that has the higher degree of visibility is the second display format, the second attribute information further includes position information designating a line feed position in the second character string.

It is preferable that the second character string is composed of one or more words. The one or more words are composed of one or more characters. The calculation unit calculates a character size of the second character string for the second display format on the condition that a word composed of a plurality of characters is displayed in a single line.

It is preferable that the storage unit further stores setting value information indicating an initial setting value of a character size of the second character string. The information processing apparatus further includes a determination unit that determines whether or not the second character string is displayable in a first display area using the first display format while the character size of the second character string is set to the initial setting value. If the determination unit determines that the second character string is not displayable in the first display area, the calculation unit calculates, based on first display area information, a character size for a case in which the second character string is displayed in the first display area using the first display format, and a character size for a case in which the second character string is displayed in the first display area using the second display format.

It is preferable that the first character string is composed of one or more words. The one or more words are composed of one or more characters. The degrees of visibility of the characters are specified by a character size and by whether or not a line feed is inserted in a middle of a word.

An information processing apparatus according to another aspect of the invention is communicably connected to a programmable display apparatus. The information processing apparatus includes: a storage unit that stores a predetermined character string and display area information indicating a size of a predetermined display area; a calculation unit that calculates, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in one column, and the second display format displaying all of the characters in the same size in a plurality of columns; and a transmission unit that transmits, in association with one another, the predetermined character string, the display area information, and attribute information to the programmable display apparatus, the attribute information being for displaying the predetermined character string on the programmable display apparatus using the one of the first display format and the second display format that has a higher degree of visibility.

A programmable display apparatus according to still another aspect of the invention is communicably connected to a programmable logic controller. The programmable display apparatus includes: a storage unit that stores a predetermined character string and display area information indicating a size of a predetermined display area; a calculation unit that calculates, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; a selection unit that selects the one of the first display format and the second display format that has a higher degree of visibility of the characters; and a display unit that displays the predetermined character string inside the predetermined display area using the selected display format.

A programmable display apparatus according to still another aspect of the invention is communicably connected to a programmable logic controller. The programmable display apparatus includes: a storage unit that stores a predetermined character string and display area information indicating a size of a predetermined display area; a calculation unit that calculates, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in one column, and the second display format displaying all of the characters in the same size in a plurality of columns; a selection unit that selects the one of the first display format and the second display format that has a higher degree of visibility of the characters; and a display unit that displays the predetermined character string inside the predetermined display area using the selected display format.

A data processing method according to still another aspect of the invention is executed on an information processing apparatus communicably connected to a programmable display apparatus. The data processing method includes: a step of calculating, based on display area information indicating a size of a predetermined display area, a degree of visibility of characters for a case in which a predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; and a step of transmitting, in association with one another, the predetermined character string, the display area information, and attribute information to the programmable display apparatus, the attribute information being for displaying the predetermined character string on the programmable display apparatus using the one of the first display format and the second display format that has a higher degree of visibility.

A data processing method according to still another aspect of the invention is executed on a programmable display apparatus communicably connected to a programmable logic controller. The data processing method includes: a step of calculating, based on display area information, a degree of visibility of characters for a case in which a predetermined character string is displayed in a predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; a step of selecting the one of the first display format and the second display format that has a higher degree of visibility of the characters; and a step of displaying the predetermined character string inside the predetermined display area using the selected display format.

A program according to still another aspect of the invention controls an information processing apparatus communicably connected to a programmable display apparatus. The program causes a processor of the information processing apparatus to execute: a step of calculating, based on display area information indicating a size of a predetermined display area, a degree of visibility of characters for a case in which a predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; and a step of transmitting, in association with one another, the predetermined character string, the display area information, and attribute information to the programmable display apparatus, the attribute information being for displaying the predetermined character string on the programmable display apparatus using the one of the first display format and the second display format that has a higher degree of visibility.

A program according to still another aspect of the invention controls a programmable display apparatus communicably connected to a programmable logic controller. The program causes a processor of the programmable display apparatus to execute: a step of calculating, based on display area information, a degree of visibility of characters for a case in which a predetermined character string is displayed in a predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; a step of selecting the one of the first display format and the second display format that offers a higher degree of visibility of the characters; and a step of displaying the predetermined character string inside the predetermined display area using the selected display format.

The invention can improve the visibility of characters on a programmable display apparatus.

### BRIEF DESCRIPTION OF THE DRAWINGS

- FIG. 1: is a schematic diagram showing a PLC system SYS.
- FIG. 2: is a block diagram showing a hardware configuration of a PC 200.
- FIG. 3: is a diagram illustrating an example of a hardware configuration of a display apparatus 5.
- FIGS. 4A to 4C: are diagrams illustrating an example of processing of the PC 200.
- FIGS. 5A to 5C: are diagrams illustrating another example related to the PC 200.
- FIGS. 6A and 6B: are diagrams illustrating a case in which processing described based on FIGS. 4A to 5C is extended to a plurality of pieces of text data and a plurality of display areas, and executed with respect to a plurality of languages.
- FIG. 7: is a functional block diagram illustrating a functional configuration of the PC 200.
- FIG. 8: shows a data table D8.
- FIG. 9: shows display area information D9.
- FIG. 10: shows data D10 that is transmitted from the PC 200 to the display apparatus 5.
- FIG. 11: is a diagram illustrating the flow of processing of the PC 200.
- FIG. 12: is a flowchart illustrating the detail of a process of step S10 of FIG. 11.
- FIG. 13: illustrates a screen 1301 displayed on the display apparatus 5, which shows the contents based on the data D10 received from the PC 200 in English.
- FIG. 14: illustrates a screen 1302 displayed on the display apparatus 5, which shows the contents based on the data D10 received from the PC 200 in Chinese.
- FIG. 15: illustrates a screen displayed on the display apparatus 5, which shows the contents based on the data D10 received from the PC 200 in Bulgarian.
- FIGS. 16A to 16C: are diagrams illustrating a screen transition on the display apparatus 5.
- FIG. 17: is a diagram illustrating a functional configuration of a PC 200A.
- FIG. 18: is a flowchart illustrating the detail of a process of step S10 of FIG. 11.
- FIG. 19: is a diagram illustrating a functional configuration of a display apparatus 5A.
- FIG. 20: shows a screen on the display apparatus 5A.

### DETAILED DESCRIPTION

A network system according to embodiments of the invention will now be described in detail with reference to the drawings. It should be noted that elements in the drawings that are identical or equivalent to one another will be given the same reference numeral, and a description thereof will not be repeated.

### [First Embodiment]

### <A. System Configuration>

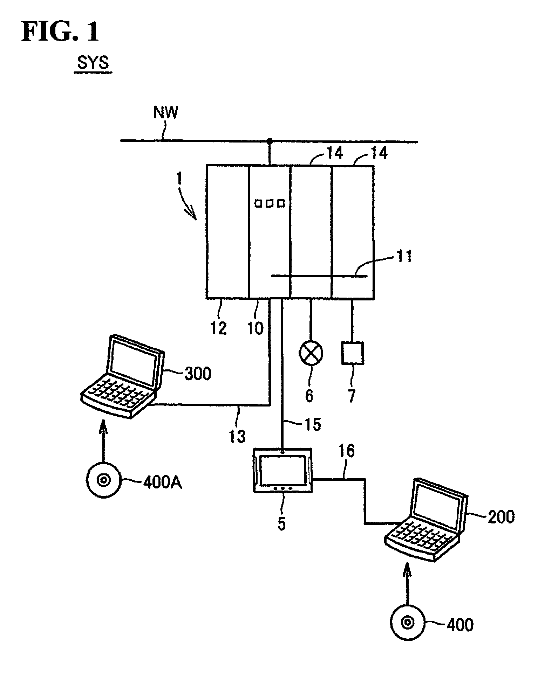

FIG. 1 is a schematic diagram showing a PLC system SYS according to an embodiment of the invention. Referring to FIG. 1, the PLC system SYS includes a PLC (programmable logic controller) 1, PCs (personal computers) 200, 300, a programmable display apparatus 5 (hereinafter simply referred to as "display apparatus 5"), a detection sensor 6, and a relay 7. The detection sensor 6 and the relay 7 are field instruments. The PLC 1 is connected to, for example, another PLC (not shown) via a network NW.

The PLC 1 includes a processing unit 10 serving as a main unit that executes programs, a power source unit 12 that supplies power to the processing unit 10 and the like, and IO (input/output) units 14 that exchanges signals with fields. The IO units 14 are connected to the processing unit 10 via a system bus 11. Typically, the IO units 14 obtain an input signal from the detection sensor 6, and drive the relay 7 in accordance with a result of execution of programs in the processing unit 10. The PLC 1 can change various settings in accordance with operation on the display apparatus 5, and can display predetermined information of the PLC 1 on the display apparatus 5.

The PC 300 functions as a support apparatus for the PLC 1. The PC 300 is communicably connected to the processing unit 10 via a connection cable 13. The display apparatus 5 is connected to the processing unit 10 via a connection cable 15. The PC 200 is communicably connected to the display apparatus 5 via a connection cable 16.

The following description is given mainly with a focus on the PC 200 (information processing apparatus) and the display apparatus 5. It should be noted that various types of processing of the PC 200, which will be described later, may be executed by the PC 300 in place of the PC 200. In this case, the PC 300 transfers data to the display apparatus 5 via the processing unit 10.

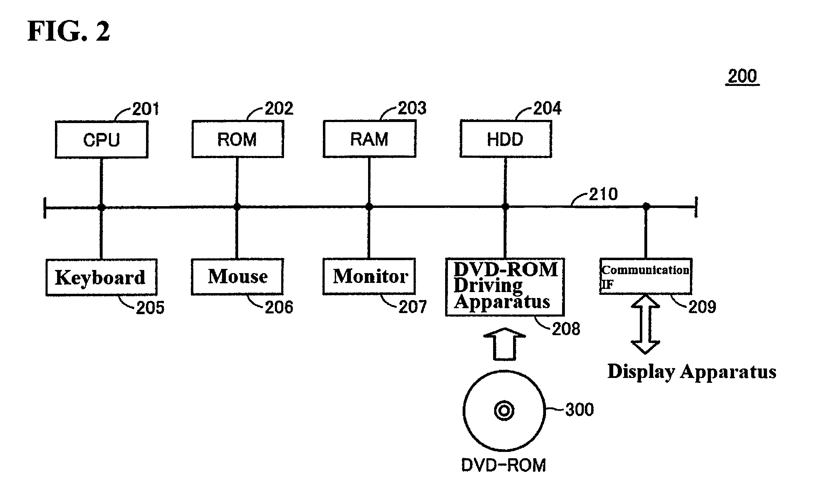

FIG. 2 is a block diagram showing a hardware configuration of the PC 200. Referring to FIG. 2, the PC 200 includes the following main constituent elements: a CPU 201 that executes programs; a ROM (read-only memory) 202 that stores data in a non-volatile manner; a RAM 203 that stores data generated through execution of programs by the CPU 201 or data input via a keyboard 205 or a mouse 206 in a volatile manner; an HDD (hard disk drive) 204 that stores data in a non-volatile manner; the keyboard 905 and the mouse 206 that receive input of instructions from a user of the PC 200; a monitor 207; a DVD-ROM driving apparatus 208; and a communication IF 209. These constituent elements are connected to one another by a data bus. A DVD-ROM 400 is loaded into the DVD-ROM driving apparatus 208.

Processing of the PC 200 is realized by various hardware items and by software executed by the CPU 201. Such software may be prestored in the HDD 204. Software may also be stored in the DVD-ROM 400 or other storage mediums and distributed as a program product. Alternatively, software may be provided as a downloadable program product by so-called information providers connected to the Internet. Such software is first stored into the HDD 204 after being read by the DVD-ROM driving apparatus 208 or other reading apparatuses from the storage mediums, or after being downloaded via the communication IF 209. The software is then read by the CPU 201 from the HDD 204, and stored into the RAM 203 in a format of an executable program. The CPU 201 executes this program.

The constituent elements of the PC 200 shown in FIG. 2 are common. Therefore, it can be said that an important aspect of the invention is software stored in the RAM 203, the HDD 204, the DVD-ROM 400, and other storage mediums, or software that can be downloaded via a network. As the operations of the hardware items of the PC 200 are widely known, a detailed description thereof will not be repeated.

It should be noted that the recording medium is not limited to a DVD-ROM, a CD-ROM, an FD (flexible disk), and a hard disk, and may be a medium that fixedly carries programs, e.g., a magnetic tape, a cassette tape, an optical disc (MO (magnetic optical disc), MD (MiniDisc), DVD (digital versatile disc)), an IC (integrated circuit) card (including a memory card), an optical card, and a semiconductor memory such as a mask ROM, an EPROM (electronically programmable read-only memory), an EEPROM (electronically erasable programmable read-only memory), and a flash ROM. Furthermore, the recording medium is a non-temporary medium from which a computer can read the programs and the like.

Programs mentioned herein include not only programs that can be executed directly by a CPU, but also programs in a source program format, compressed programs, encrypted programs, and the like.

As the hardware configuration of the PC 300 is similar to the hardware configuration of the PC 200, a description thereof will not be repeated.

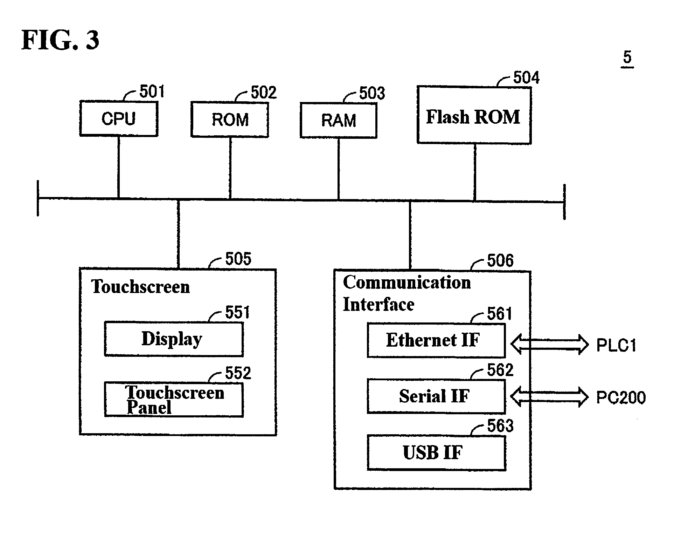

FIG. 3 is a diagram illustrating an example of a hardware configuration of the display apparatus 5. Referring to FIG. 3, the display apparatus 5 includes a CPU (central processing unit) 501 that executes various calculations, a ROM (read-only memory) 502, a RAM (random-access memory) 503, a flash ROM 504 that stores various programs in a non-volatile manner, a touchscreen 505, and a communication interface 506. These elements are connected to one another via an internal bus.

The touchscreen 505 includes a display 551 and a touchscreen panel 552 that is arranged to cover the display 551. The communication interface 506 includes an Ethernet (registered trademark) IF (interface) 561, a serial IF 562, and a USB (universal serial bus) IF 563.

The CPU 501 deploys the programs stored in the flash ROM 504 into the RAM 503 and the like, and executes the deployed programs. The ROM 502 generally stores programs such as an operating system (OS). The RAM 503 is a volatile memory and used as a working memory.

The Ethernet IF 561 supports Ethernet communication protocols and performs data communication with the PLC 1. The serial IF 562 supports serial communication protocols and performs data communication with, for example, the PC 200. The USB IF 563 supports USB communication protocols and performs data communication with, for example, a USB memory.

The constituent elements of the display apparatus 5 shown in FIG. 3 are common. Therefore, it can be said that an important aspect of the invention is software stored in a memory such as the flash ROM 504, or software that can be downloaded via a network. As the operations of hardware items of the display apparatus 5 are widely known, a detailed description thereof will not be repeated.

### <B. Outline of Processing>

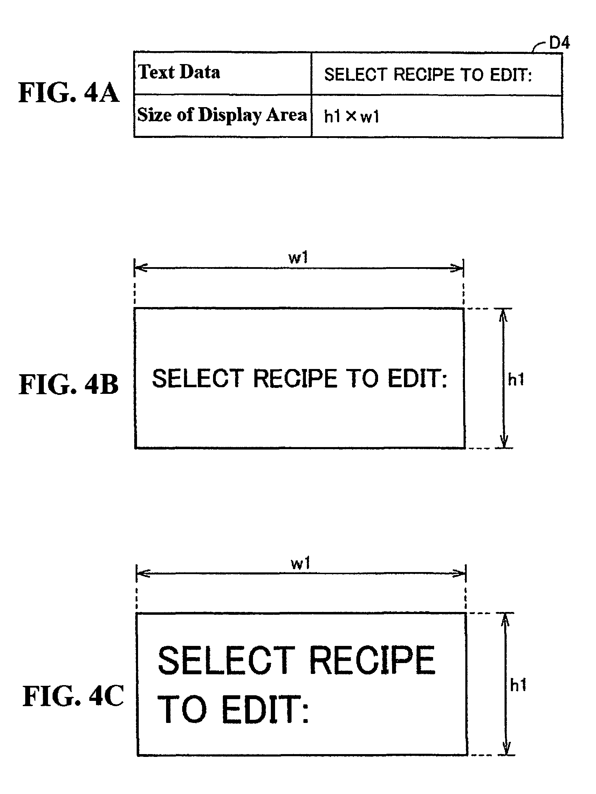

FIGS. 4A to 4C are diagrams illustrating an example of processing of the PC 200. FIG. 4A shows an outline of data D4 stored in the PC 200. Referring to FIG. 4A, the data D4 includes text data (character string data) and a size of a display area for displaying the text data on the display apparatus 5. The text data includes a plurality of English words. The size of the display area is defined by information of a vertical size and information of a horizontal size on the display apparatus 5. It can be said that, if the text data is displayed with a frame, the size of the display area is the size of the display frame.

FIG. 4B shows a state in which the character string (text data) is displayed in the display area specified by the size thereof shown in FIG. 4A using a display format that displays all characters in the text data of FIG. 4A in the same size (font size, the number of points in the characters) in a single line (hereinafter also referred to as "first display format"). FIG. 4C shows a state in which the character string (text data) is displayed in the display area specified by the size thereof shown in FIG. 4A using a display format that displays all characters in the text data of FIG. 4A in the same size in a plurality of lines (specifically, two lines) (hereinafter also referred to as "second display format").

Referring to FIGS. 4B and 4C, a degree of visibility is higher when the text data shown in FIG. 4A is displayed in the display area of the corresponding size (wl × h1) using the second display format (two-line display) than when the text data is displayed in the display area of the corresponding size using the first display format (one-line display). Specifically, as a character size of the second display format is larger than a character size of the first display format, the second display format makes the characters more easily visible to the user than the first display format.

In light of this, regarding the data D4, the PC 200 generates data for displaying the text data on the display apparatus 5 in two lines, and transmits the generated data to the display apparatus 5. In this way, the display apparatus 5 can display the text data in the display area (inside the display frame) using the second display format that has better visibility among the first display format and the second display format.

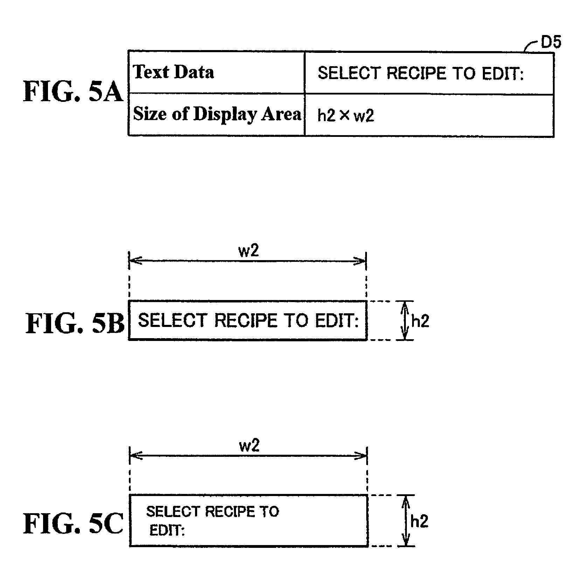

FIGS. 5A to 5C are diagrams illustrating another example related to the PC 200. FIG. 5A shows an outline of data D5 stored in the PC 200. Referring to FIG. 5A, the data D5 includes text data which is the same as the text data in the data D4 (FIG. 4A), and a size of a display area for displaying this text data on the display apparatus 5. The text data includes a plurality of English words. The size of the display area is defined by information of a vertical size and information of a horizontal size on the display apparatus 5.

FIG. 5B shows a state in which the character string (text data) is displayed in the display area specified by the size shown in FIG. 5A using a display format that displays all characters in the text data of FIG. 5A in the same size in a single line (the first display format).

FIG. 5C shows a state in which the character string (text data) is displayed in the display area specified by the size thereof shown in FIG. 5A using a display format that displays all characters in the text data of FIG. 5A in the same size in a plurality of lines (specifically, two lines) (the second display format).

Referring to FIGS. 5B and 5C, a degree of visibility is higher when the text data shown in FIG. 5A is displayed in the display area of the corresponding size (w2 × h2) using the first display format (one-line display) than when the text data is displayed in the display area of the corresponding size using the second display format (two-line display). Specifically, as a character size of the first display format is larger than a character size of the second display format, the first display format makes the characters more easily visible to the user than the second display format.

In light of this, regarding the data D5, the PC 200 generates data for displaying the text data on the display apparatus 5 in a single line, and transmits the generated data to the display apparatus 5. In this way, the display apparatus 5 can display the text data in the display area (inside the display frame) using the first display format that has better visibility among the first display format and the second display format.

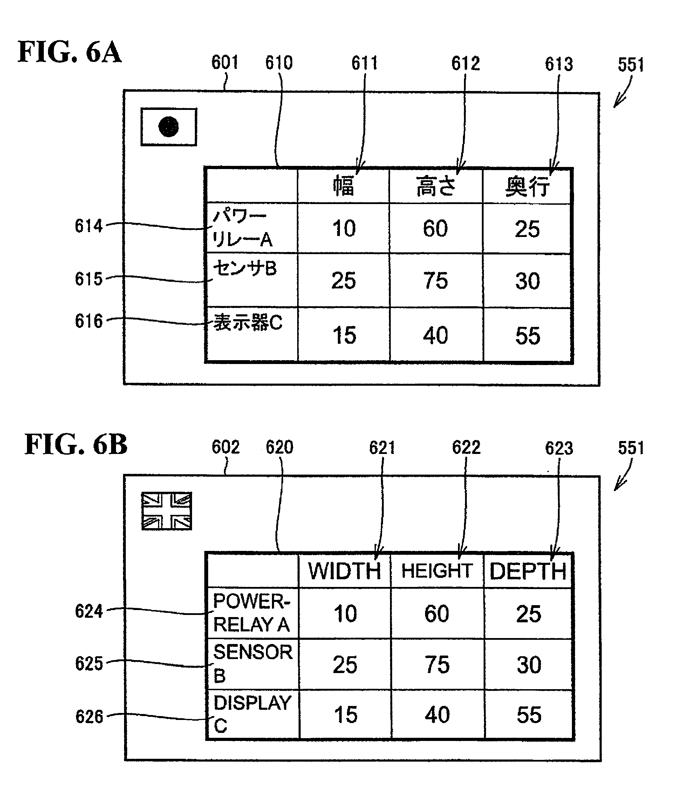

FIGS. 6A and 6B are diagrams illustrating a case in which processing that has been described based on FIGS. 4A to 5C is extended to a plurality of pieces of text data and a plurality of display areas, and executed with respect to a plurality of languages. FIG. 6A shows a state in which data obtained through processing executed by the PC 200 with respect to Japanese is displayed on the display apparatus 5. FIG. 6B shows a state in which data obtained through processing executed by the PC 200 with respect to English corresponding to Japanese shown in FIG. 6A is displayed on the display apparatus 5. That is to say, FIGS. 6A and 6B show resultant output of the display apparatus 5.

Referring to FIG. 6A, a screen 601 is displayed on the display 551 of the display apparatus 5. The screen 601 shows a table 610 including a plurality of characters 611 to 616. The characters 611 to 613, 615, 616 are displayed using a one-line display format (first display format). The characters 614 are displayed using a two-line display format (second display format). It should be noted that the characters 611 to 613 have the same character size.

Referring to FIG. 6B, a screen 602 is displayed on the display 551 of the display apparatus 5. The screen 602 shows a table 620 including a plurality of characters 621 to 626. The characters 621 to 626 are respectively the English translations of the characters 611 to 616 shown in FIG. 6A.

The characters 621 to 623 are displayed using a one-line display format (first display format). The characters 624 to 626 are displayed using a two-line display format (second display format). It should be noted that the characters 624 to 626 have the same character size. On the other hand, the size of the characters 621, 623 is larger than the size of the characters 622. That is to say, while the characters 612 are displayed in the same size as the characters 611, 613 in FIG. 6A, the characters 622 corresponding to the characters 612 have a smaller size than the characters 621, 623 in FIG. 6B. For example, the size of the characters 621, 623 is 12 pt (points), and the size of the characters 622 is 10 pt.

Furthermore, while the characters 615, 616 are displayed in a single line in FIG. 6A, the characters 625, 626 in FIG. 6B, which correspond to the characters 615, 616, are displayed in two lines.

In this way, in the case of two corresponding character strings in different languages (e.g., the characters 615 and the characters 625), one may be displayed in a single line, and the other may be displayed in a plurality of lines (two lines). In addition, in the case of characters (611 to 613) that have the same size in a first language (e.g., Japanese), all of the corresponding characters in a second language (e.g., English) do not necessarily have the same size. This is not limited to two languages, and is the same for three or more languages.

### <C. Functional Configuration and Data>

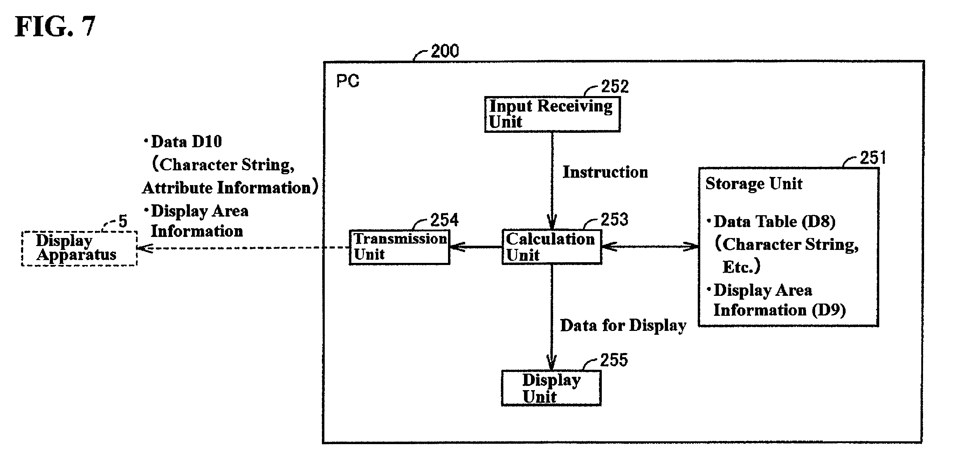

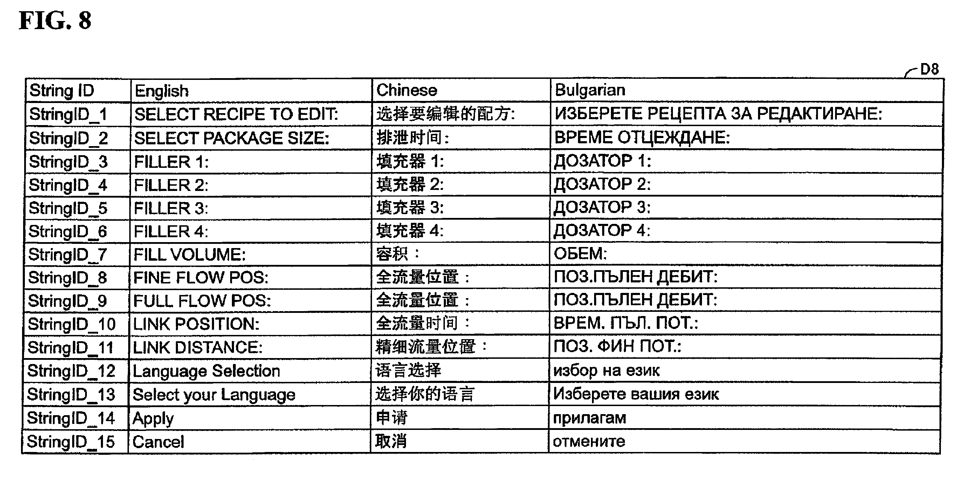

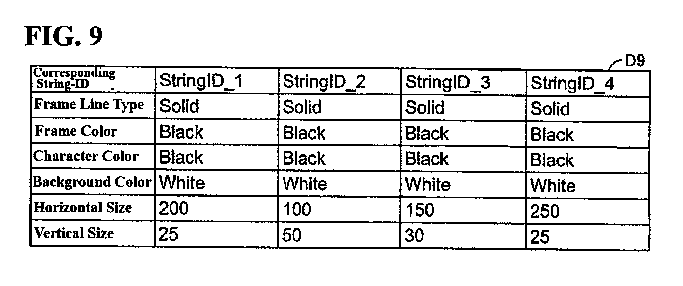

FIG. 7 is a functional block diagram illustrating a functional configuration of the PC 200. Referring to FIG. 7, the PC 200 includes a storage unit 251, an input receiving unit 252, a calculation unit 253, a transmission unit 254, and a display unit 255. The storage unit 251 stores a data table D8 and display area information D9. Before explaining the blocks, the data table D8 and the display area information D9 will be described below based on FIGS. 8 and 9.

FIG. 8 shows the data table D8. Referring to FIG. 8, any "String ID" is in correspondence with character strings in three languages in the data table D8. Specifically, in the data table D8, an English character string (English expression), a Chinese character string (Chinese expression), and a Bulgarian character string (Bulgarian expression) are in association with one another on a per-identification number basis.

Data stored in the data table D8 (expressions in the respective languages) is input by the user in advance. The PC 200 is configured in such a manner that, even after the data has been input by the user, data can be added to the data table D8 through update or addition processing.

FIG. 9 shows the display area information D9. Referring to FIG. 9, any "StringID" in FIG. 8 is in correspondence with a frame line type, a frame color, a character color, a background color, a horizontal size, and a vertical size. That is to say, a display area is specified by these pieces of information. As one example, a display area corresponding to "String ID_1" has a rectangular frame with a horizontal size of 200 pixels, a vertical size of 25 pixels, and a black solid line. In this display area, the color inside the frame (background color) is white, and the color of characters displayed inside the frame is black. It should be noted that data of "String ID 5" onward is omitted from FIG. 9.

Data stored in the display area information D9 is input by the user in advance. The PC 200 is configured in such a manner that, even after the data has been input by the user, data can be added to the display area information D9 through update or addition processing.

To simplify the description, in the data D4 of FIG. 4A and the data D5 of FIG. 5A described above, a character string that could be included in the data table D8 of FIG. 8 and a notation related to a horizontal size and a vertical size in the display area information D9 of FIG. 9 are extracted and presented.

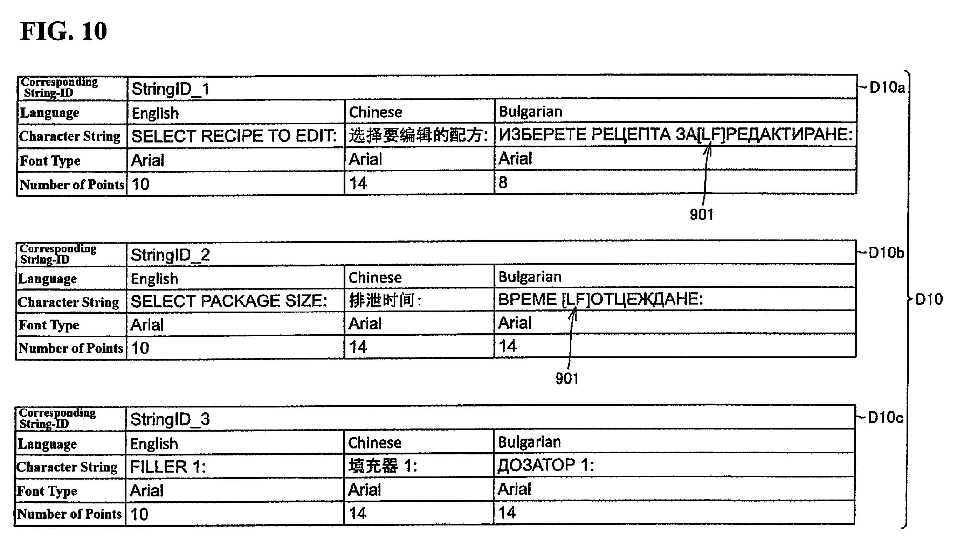

Referring back to FIG. 7, the functions of the PC 200 will now be described. The input receiving unit 252 receives input from the user. For example, the input receiving unit 252 receives an instruction for generating or updating later-described data D10 (FIG. 10) to be transmitted to the display apparatus 5. Upon receiving the instruction, the input receiving unit 252 transmits the same to the calculation unit 253.

Based on the display area information D9, the calculation unit 253 calculates a degree of visibility of characters for a case in which a character string is displayed in a display area using the first display format (a display format that displays all characters in the same size (font size, the number of points) in a single line), and a degree of visibility of the characters for a case in which the character string is displayed in the display area using the second display format (a display format that displays all characters in the same size in a plurality of lines). A degree of visibility of characters is, for example, the character size. The larger the character size, the higher the visibility of the characters. For the sake of convenience, the following describes an exemplary case in which the degree of visibility is the character size (font size, the number of points).

Specifically, the calculation unit 253 calculates character sizes in the first display format and the second display format for every one of character strings in the respective languages corresponding to "String IDs" included in the data table D8. As one example, for "String ID_1", the calculation unit 253 calculates degrees of character sizes in the first display format and the second display format for all of the English character string, the Chinese character string, and the Bulgarian character string. The calculation unit 253 also executes this processing for "String ID_2", "String ID_3", and so on, similarly to "String In_1".

If the input receiving unit 252 receives the aforementioned instruction again after character sizes of character strings in the respective languages have already been calculated for all "String IDs", the calculation unit 253 executes the following processing. That is to say, the calculation unit 253 calculates character sizes only for "String IDs" that have been added or changed in the data table D8 or the display area information D9. More precisely, the calculation unit 253 calculates character sizes only for a portion targeted for correction or addition.

For example, if a Chinese character string corresponding to "String ID_4" is corrected in the data table D8, the calculation unit 253 re-calculates character sizes for this corrected portion. Similarly, if a size has been changed in the display area information, the calculation unit 253 re-calculates character sizes of a character string to be displayed in the corrected display area. Furthermore, if unregistered data (a character string, display area information) is added to the data table D8 and the display area information D9, the calculation unit 253 calculates character sizes for the added data.

The following is a more detailed description of processing of the calculation unit 253. A character string in the data table D8 is composed of one or more words that are composed of one or more characters. The calculation unit 253 calculates character sizes of a character string in the second display format on the condition that a word composed of a plurality of characters is displayed in the same line. That is to say, if a character string is displayed in a display area on the display apparatus in such a manner that line feed processing is executed between one word and another, the calculation unit 253 calculates character sizes under the restriction that a line feed is inserted between one word and another.

For any character string whose character sizes have been calculated, the transmission unit 254 transmits the following to the display apparatus 5 in association with one another: the character string; display area information; and attribute information for displaying the character string on the display apparatus 5 using the one of the first display format and the second display format that has a larger character size. The attribute information includes at least information of a character size of the character string calculated by the calculation unit 253 of the PC 200, as well as position information that designates a line feed position in the character string if the character string is to be displayed in a plurality of lines (that is to say, if the character string is to be displayed using the second display format). Specifically, the transmission unit 254 transmits later-described data D10, which includes the character string and the attribute information, and the display area information D9 to the display apparatus 5.

FIG. 10 shows the data D10 that is transmitted from the PC 200 to the display apparatus 5. Referring to FIG. 10, the data D10 includes a plurality of pieces of data D10a, D10b, D10c, and so on. The data D10a corresponds to "String ID_1". The data D10b corresponds to "String ID_2". The data D10c corresponds to "String ID_3". It should be noted that data of "String ID_4" onward is omitted from FIG. 10.

The pieces of data D10a, D10b, D10c include character strings in the respective languages, font types of the respective character strings, and the numbers of points (character sizes) of the respective characters. An "[LF]" sign included in Bulgarian character strings in the pieces of data D10a, D10b is a line feed code serving as an instruction for a line feed. This "[LF]" sign designates a line feed position. As such, the "[LF]" sign is used as information for designating a line feed position.

To further expound, any character string in the data D10 is displayed on the display apparatus 5 using a one-line display format (first display format) if the "[LF]" sign is not included therein, and displayed on the display apparatus 5 using a two-line display format (second display format) if one "[LF]" sign is included therein. If n "[LF]" signs are included in one character string (n being a natural number equal to or greater than two), the character string is displayed on the display apparatus 5 in n + 1 lines.

As is apparent from the data D10, a character size (the number of points) is decided on for each one of three character strings with the same meaning (e.g., expressions in three languages in "String ID_1"). A font type is information indicating a type designated by the user on the PC 200, or a default type.

Referring back to FIG. 7, the display unit 255 displays various types of information corresponding to an instruction from the user so as to enable the user to check various types of information. The display unit 255 displays, for example, a screen showing the data table D8, a screen for editing the data table D8, a screen showing the display area information D9, and a screen for editing the display area information D9. The display unit 255 also displays a screen displayed on the display apparatus 5 so as to enable the user to check a display state of the display apparatus 5 in advance.

### <D. Configuration for Control>

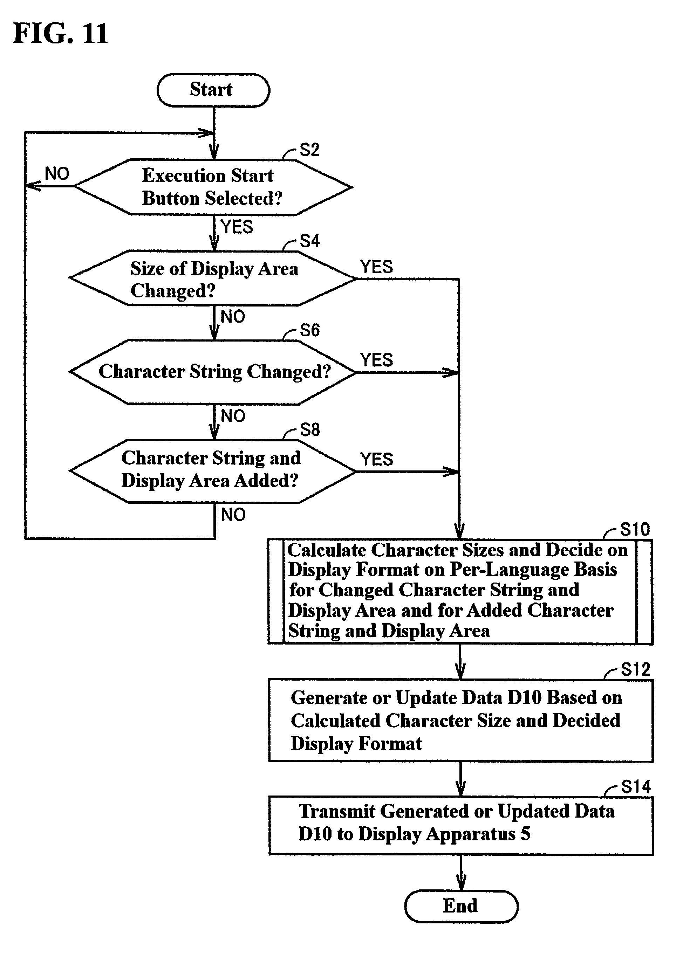

FIG. 11 is a diagram illustrating the flow of processing of the PC 200. Referring to FIG. 11, in step S2, the PC 200 (precisely, the CPU 201) determines whether or not it has received an operation of selecting a button for starting the execution of generation of the data D10 and transmission processing. It should be noted that a button for instructing the generation of the data and a button for instructing the transmission processing may be provided separately.

If the button has been selected (YES of step S2), the PC 200 determines in step S4 whether or not a size (a horizontal size and a vertical size) of a display area for displaying a character string has been changed. If the button has not been selected (NO of step S2), the PC 200 returns to the process of step S2.

If the size of the display area has not been changed (NO of step S4), the PC 200 determines in step S6 whether or not the character string has been changed. If the size of the display area has been changed (YES of step S4), the PC 200 proceeds to the process of step S10.

If the character string has not been changed (NO of step S6), the PC 200 determines in step S8 whether or not a character string and a display area have been added. If the character string has been changed (YES of step S6), the PC 200 proceeds to the process of step S10.

If the determination of step S8 is negative (NO of step S8), the PC 200 returns to the process of step S2. If the determination of step S8 is affirmative (YES of step S8), the PC 200 proceeds to the process of step S10.

In step S10, the PC 200 calculates character sizes and decides on a display format on a per-language basis for the changed character string and display area, and for the added character string and display area. The PC 200 generates or updates the data D10 based on a calculated character size and a decided display format (the first display format or the second display format). In step S14, the PC 200 transmits the data D10 that was generated or updated in step S12 to the display apparatus 5. The PC 200 may be configured to transmit only data of an updated portion to the display apparatus 5 if the data D10 is updated. The updated portion to be transmitted may be data in units of "String ID" in the data D10 (e.g., the data D10a), or may be data in units of language in "String ID" (e.g., data related to Chinese in the data D10a).

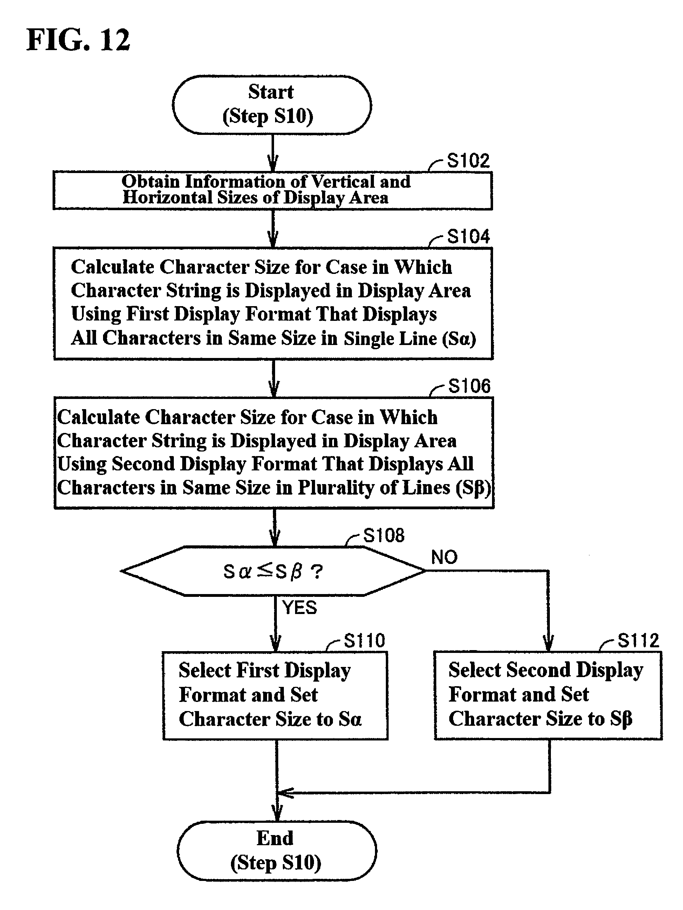

FIG. 12 is a flowchart illustrating the detail of the process of step S10 of FIG. 11. Specifically, FIG. 12 is a diagram illustrating a process related to one character string in one language in the data D8. The PC 200 executes a sequence of processes shown in FIG. 12 on a per-character string basis (for each one of character strings in the respective languages).

Referring to FIG. 12, in step S102, the PC 200 (precisely, the CPU 201) obtains information of vertical and horizontal sizes of a display area. Specifically, the PC 200 reads, from the data D9, information of a horizontal size and information of a vertical size of "String ID" corresponding to a character string.

In step S104, the PC 200 calculates a character size of the character string for a case in which the character string is displayed in the display area using the first display format (Sα). In step S106, the PC 200 calculates a character size of the character string for a case in which the character string is displayed in the display area using the second display format (Sβ).

In step S108, the PC 200 determines whether or not Sα is smaller than or equal to Sβ. If it is determined that Sα is smaller than or equal to Sβ (YES of step S108), the PC 200 selects the first display format from among the first display format and the second display format, and sets a character size at which the characters are displayed using the first display format to "Sα" in step S110. The character size set here corresponds to, for example, the number of points "10" in the data D10a (FIG. 10). On the other hand, if it is determined that Sα is not smaller than or equal to Sβ (NO of step S108), the PC 200 selects the second display format from among the first display format and the second display format, and sets a character size at which the characters are displayed using the second display format to "Sβ" in step S112. The character size set here corresponds to, for example, the number of points "8" in the data D10a (FIG. 10).

### <E. UI of Display Apparatus>

A description is now given of an example of a user interface displayed on the display apparatus 5. The following description pertains to a case in which the same content is displayed in different languages (English, Chinese, and Bulgarian).

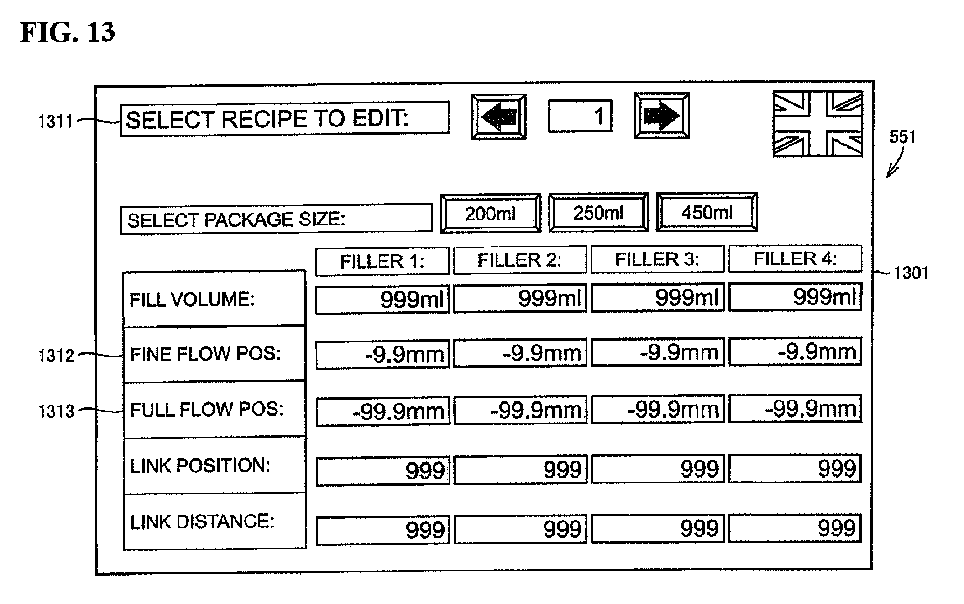

FIG. 13 illustrates a screen 1301 displayed on the display apparatus 5, which shows the contents based on the data D10 received from the PC 200 in English. Referring to FIG. 13, character strings are displayed in a plurality of display areas on the screen 1301 of the display 551. For example, the display apparatus 5 displays a character string "SELECT RECIPE TO EDIT:" in a display area 1311 using the first display format (i.e., in a single line). The display apparatus 5 also displays a character string "FINE FLOW POS:" in a display area 1312 using the first display format. The display apparatus 5 further displays a character string "FULL FLOW POS:" in a display area 1313 using the first display format.

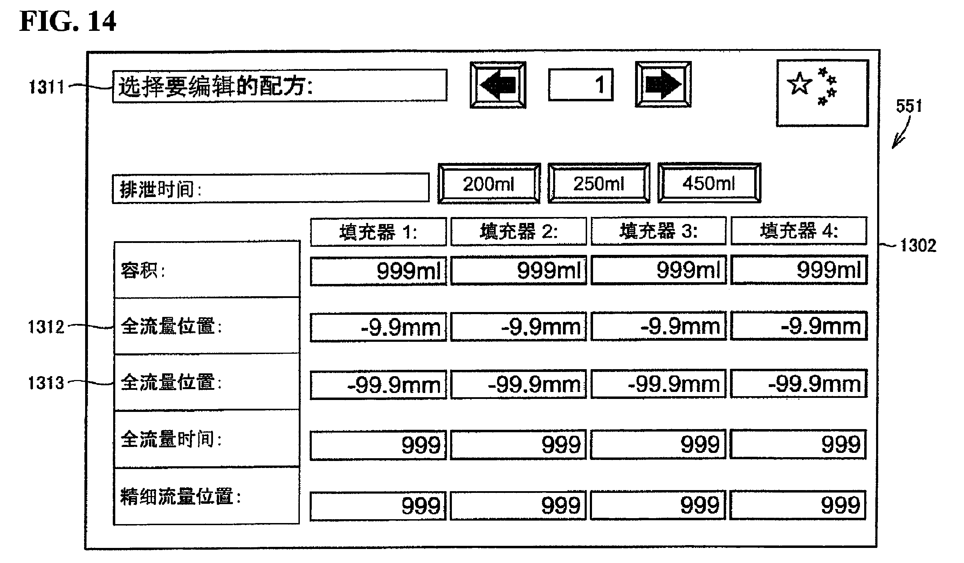

FIG. 14 illustrates a screen 1302 displayed on the display apparatus 5, which shows the contents based on the data D10 received from the PC 200 in Chinese. Referring to FIG. 14, character strings are displayed in a plurality of display areas on the screen 1302 of the display 551. For example, the display apparatus 5 displays a Chinese character string corresponding to the character string "SELECT RECIPE TO EDIT:" in the display area 1311 using the first display format (i.e., in a single line). The display apparatus 5 also displays a Chinese character string corresponding to the character string "FINE FLOW POS:" in the display area 1312 using the first display format. The display apparatus 5 further displays a Chinese character string corresponding to the character string "FULL FLOW POS:" in the display area 1313 using the first display format.

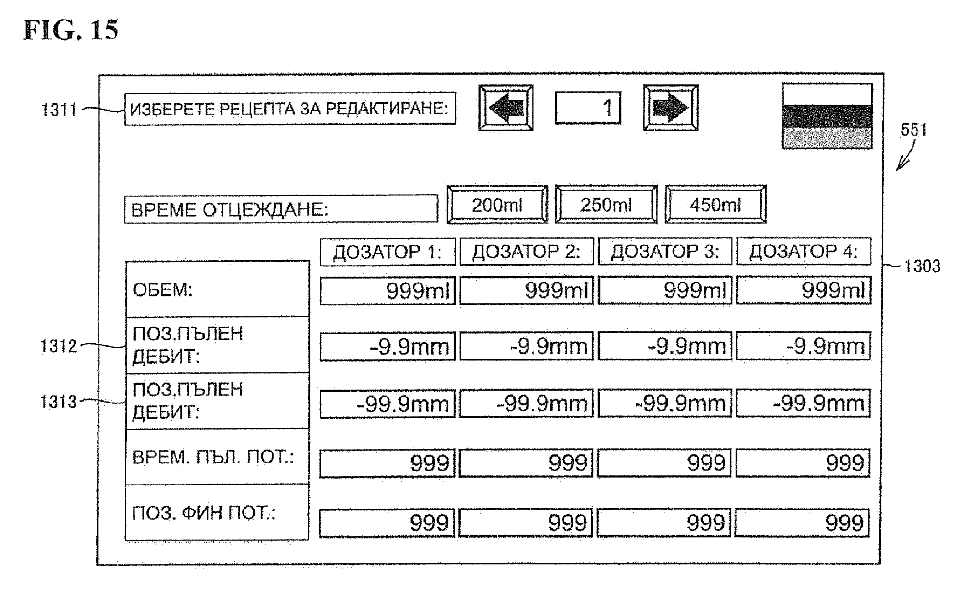

FIG. 15 illustrates a screen 1303 displayed on the display apparatus 5, which shows the contents based on the data D10 received from the PC 200 in Bulgarian. Referring to FIG. 15, character strings are displayed in a plurality of display areas on the screen 1303 of the display 551. For example, the display apparatus 5 displays a Bulgarian character string corresponding to the character string "SELECT RECIPE TO EDIT:" in the display area 1311 using the first display format (i.e., in a single line). The display apparatus 5 also displays a Bulgarian character string corresponding to the character string "FINE FLOW POS:" in the display area 1312 using the second display format (in a plurality of lines). The display apparatus 5 further displays a Bulgarian character string corresponding to the character string "FULL FLOW POS:" in the display area 1313 using the second display format.

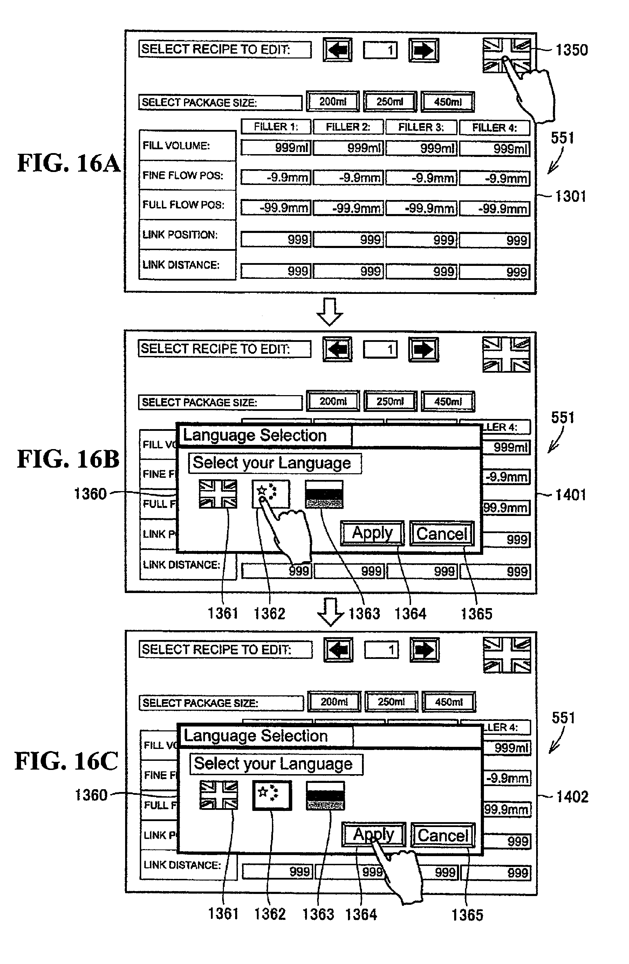

FIGS. 16A to 16C are diagrams illustrating a screen transition on the display apparatus 5. Specifically, FIGS. 16A to 16C are diagrams illustrating user operations of causing a transition from the screen 1301 displayed in English to the screen 1302 displayed in Chinese. The state of FIG. 16A is the same as the state of FIG. 13. That is to say, the state of FIG. 16A represents the screen 1301 displayed on the display apparatus 5, which shows the contents based on the data D10 in English.

If the user selects an object image 1350 showing the Union flag through a touch operation, the display apparatus 5 displays a window 1360 as can be seen in the state of FIG. 16B. The window 1360 includes an object image 1361 showing the Union flag, an object image 1362 showing the Chinese flag, an object image 1363 showing the Bulgarian flag, an object image 1364 showing "Apply", and an object image 1365 showing "Cancel".

If the user selects, for example, the object image 1362 through a touch operation, the object image 1362 is placed in a selected state. In this selected state, if the user selects the object 1364 through a touch operation, the display apparatus 5 displays the screen 1302 shown in FIG. 14.

In this way, upon receiving a user operation, the display apparatus 5 can display a plurality of character strings respectively in corresponding display areas in a language designated by the user from among a plurality of predetermined languages.

### [Second Embodiment]

In the data D8 shown in FIG. 8 according to the first embodiment, initial setting values (default values, values set by the user) of character sizes are not in correspondence with character strings in the respective languages. The present embodiment describes a case in which initial setting values of character sizes are in correspondence with character strings.

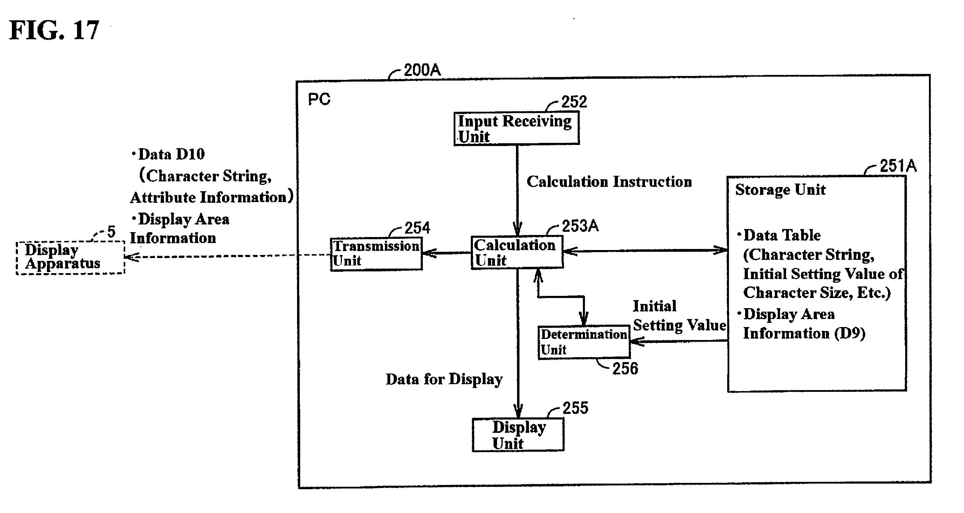

FIG. 17 is a diagram illustrating a functional configuration of a PC 200A according to the present embodiment. Referring to FIG. 17, the PC 200A includes a storage unit 251A, an input receiving unit 252, a calculation unit 253A, a transmission unit 254, a display unit 255, and a determination unit 256. The PC 200A differs from the PC 200 according to the first embodiment in including the storage unit 251A in place of the storage unit 251, the calculation unit 253A in place of the calculation unit 253, and the determination unit 256.

The storage unit 251A stores a data table in which initial setting values of character sizes are stored, and display area information D9.

The determination unit 256 determines, on a per-character string basis, whether or not a character string is displayable in a display area using the first display format while a character size thereof is set to an initial setting value. That is to say, the determination unit 256 determines, on a per-character string basis, whether or not a character string can be displayed in a display area corresponding thereto in a single line in a size of an initial setting value.

If the determination unit 256 determines that the character string cannot be displayed in the display area (that is to say, if the character string cannot be displayed in the display area in a single line using the initial setting value), the calculation unit 253A executes the following processing. That is to say, based on the display area information D9, the calculation unit 253A calculates a character size for a case in which the character string is displayed in the display area using the first display format, and a character size for a case in which the character string is displayed in the display area using the second display format.

On the other hand, if the determination unit 256 determines that the character string can be displayed in the display area (that is to say, if the character string can be displayed in the display area in a single line using the initial setting value), the calculation unit 253A does not calculate the character sizes in the PC 200A.

Similarly to the PC 200, the PC 200A executes the sequence of processes shown in FIG. 11 according to the first embodiment. In the first embodiment, the sequence of processes shown in FIG. 12 is executed in step S10 of FIG. 11. In contrast, in the present embodiment, a sequence of processes different from FIG. 12 is executed in step S10 of FIG. 11.

It should be noted that the PC 200A has a hardware configuration similar to that of the PC 200. Therefore, a description of the hardware configuration of the PC 200A will not be repeated.

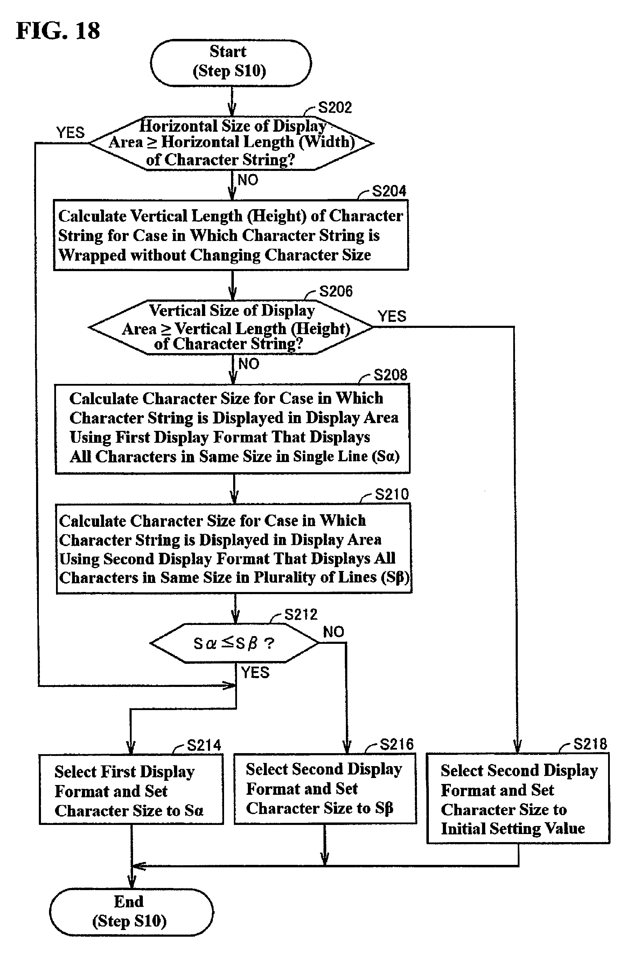

FIG. 18 is a flowchart illustrating the detail of the process of step S10 of FIG. 11. Specifically, similarly to FIG. 12, FIG. 18 is a diagram illustrating a process related to one character string in one language. The PC 200A executes a sequence of processes shown in FIG. 18 on a per-character string basis (for each one of character strings in the respective languages).

Referring to FIG. 18, the PC 200A determines in step S202 whether or not a horizontal size of a display area is larger than a horizontal length (i.e., width) of a character string. If the PC 200A determines that the horizontal size of the display area is larger than the horizontal length of the character string (YES of step S202), it proceeds to the process of step S214. If the PC 200A determines that the horizontal size of the display area is not larger than the horizontal length of the character string (NO of step S202), the PC 200A calculates a vertical length (i.e., height) of the character string for a case in which the character string is wrapped without changing a character size in step S204.

In step S206, the PC 200A determines whether or not a vertical size of the display area is larger than the vertical length (height) of the character string. If it is determined that the vertical size of the display area is larger than the vertical length of the character string (YES of step S206), the second display format is selected from among the first display format and the second display format, and a character size for a case in which characters are displayed using the second display format is set to an initial setting value in step S218. If it is determined that the vertical size of the display area is not larger than the vertical length of the character string (NO of step S206), a character size of the character string for a case in which the character string is displayed in the display area using the first display format (Sα) is calculated in step S208. In step S210, the PC 200A calculates a character size of the character string for a case in which the character string is displayed in the display area using the second display format (Sβ).

In step S212, the PC 200A determines whether or not Sα is smaller than or equal to Sβ. If it is determined that Sα is smaller than or equal to Sβ (YES of step S212) and if the determination of step S202 is affirmative, the PC 200A selects the first display format from among the first display format and the second display format, and sets the character size for the case in which the characters are displayed using the first display format to "Sα" in step S214. On the other hand, if it is determined that Sα is not smaller than or equal to Sβ (NO of step S212), the PC 200A selects the second display format from among the first display format and the second display format, and sets the character size for the case in which the characters are displayed using the second display format to "Sβ" in step S216.

The PC 200A enables display of screens on the display apparatus 5 just like when the PC 200 is used.

### [Third Embodiment]

In the first embodiment, the PC 200 executes processing for calculating character sizes, selecting a display format, and the like. The present embodiment describes a configuration in which such processing is executed by a display apparatus itself.

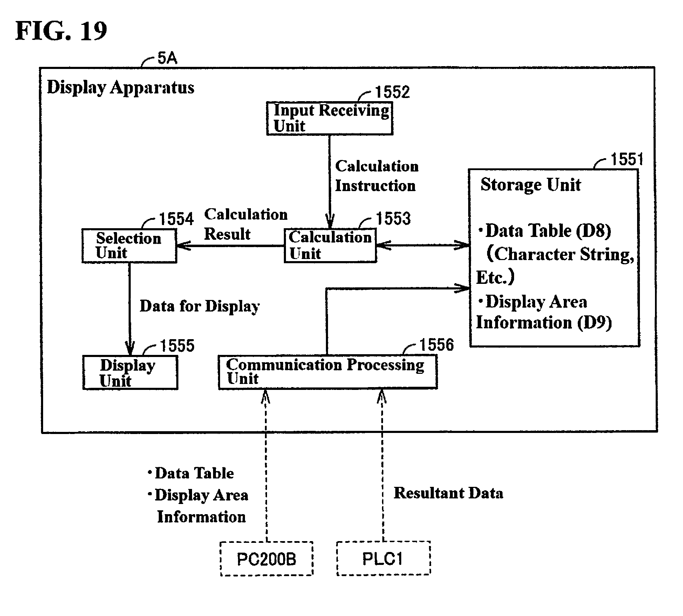

FIG. 19 is a diagram illustrating a functional configuration of a display apparatus 5A according to the present embodiment. Referring to FIG. 19, the display apparatus 5A includes a storage unit 1551, an input receiving unit 1552, a calculation unit 1553, a selection unit 1554, a display unit 1555, and a communication processing unit 1556. Comparing the display apparatus 5A with the PC 200, the storage unit 251 corresponds to the storage unit 1551, the input receiving unit 252 corresponds to the input receiving unit 1552, and the calculation unit 253 corresponds to the calculation unit 1553.

The storage unit 1551 stores a data table D8 and display area information D9. The input receiving unit 1552 receives touch input from the user. For example, the input receiving unit 1552 receives an instruction for generating data D10 (FIG. 10). Upon receiving the instruction, the input receiving unit 1552 transmits the same to the calculation unit 1553.

Similarly to the calculation unit 253, based on the display area information D9, the calculation unit 1553 calculates a degree of visibility of characters for a case in which a character string is displayed in a display area using the first display format, and a degree of visibility of the characters for a case in which the character string is displayed in the display area using the second display format. As stated in the first embodiment, a degree of visibility of characters is, for example, a character size. A result of calculation by the calculation unit 1553 is transmitted to the selection unit 1554.

Except for the transmission of the result of calculation to the selection unit 1554, various types of processing of the calculation unit 553 is the same as processing of the calculation unit 253 of the PC 200, and therefore a description of this processing will not be repeated.

The selection unit 1554 selects the one of the first display format and the second display format that has a higher degree of visibility of characters.

The display unit 1555 displays the character string inside a corresponding display area using the display format selected by the selection unit 1554. In this way, the display apparatus 5A can display, for example, the screens shown in FIGS. 13 to 15 on a display.

The communication processing unit 1556 is an interface for communicating with the PLC 1 and a PC 200B. It should be noted that a configuration of the PC 200B is equivalent to the configuration of the PC 200 minus the calculation unit 253. The display apparatus 5A obtains the data table D8 and the display area information D9 from the PC 200B via the communication processing unit 1556. It is permissible to adopt a configuration in which the data table D8 and the display area information D9 are stored directly into the display apparatus 5A without the intermediary of the PC 200A.

As a hardware configuration of the display apparatus 5A is the same as the hardware configuration of the display apparatus 5, a description thereof will not be repeated.

Similarly to the first and second embodiments, the above configuration enables display of screens on the display apparatus 5A just like when the PCs 200, 200A are used.

While the display apparatus 5A is configured to execute a part of processing of the PC 200 in the above-described example, the display apparatus 5A may be configured to execute a part of processing of the PC 200A according to the second embodiment. In other words, the display apparatus 5A may execute processing executed by the PC 200A in the second embodiment, i.e., processing for calculating character sizes, selecting a display format, and the like.

### <F. Modification Examples>

### (1) Modification Example Related to Third Embodiment

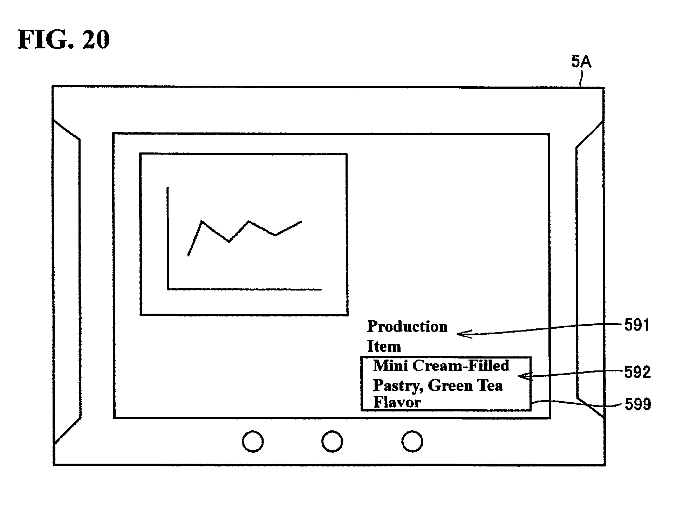

FIG. 20 shows a screen on the display apparatus 5A. Referring to FIG. 20, similarly to the display apparatus 5, the display apparatus 5A receives various types of information from the PLC 1 and displays the received information on the screen. For example, in one aspect, the display apparatus 5A displays a character string 591 and a character string 592. The character string 592 is displayed in a display area specified by a display frame 599.

With respect to the character string 592, the display apparatus 5A executes the above-described calculation processing of the calculation unit 1553, the above-described selection processing of the selection unit 1554, and the above-described display processing of the display unit 1555. In this way, the display apparatus 5A selects the one of the first display format and the second display format that has a higher degree of visibility, not only for a character string transmitted from the PC 200B, but also for a character string transmitted from the PLC 1. It should be noted that the processing for the character string 592 may be executed similarly for the character string 591.

### (2) First Modification Example Related to First to Third Embodiments

While the first to third embodiments have described an exemplary case in which text is displayed in the form of horizontal writing, no limitation is intended in this regard. The techniques described in the first to third embodiments are applicable to a case in which text is displayed in the form of vertical writing.

In this case, it is sufficient for the calculation units of the respective embodiments to execute the following processing. That is to say, based on the display area information D9, the calculation units calculate a degree of visibility of characters for a case in which a character string is displayed in a display area using a display format that displays all characters in the same size in one column, and a degree of visibility of the characters for a case in which the character string is displayed in the display area using a display format that displays all characters in the same size in a plurality of columns.

### (3) Second Modification Example Related to First to Third Embodiments

While a size of a character string has been described above as an example of a degree of visibility, no limitation is intended in this regard. For example, not only a character size, but also whether or not a line feed is inserted in the middle of a word, may be taken into consideration as a degree of visibility.

For example, in the case of a configuration that permits a line feed in the middle of a word, if a character size for the second display format is larger than a character size for the first display format, then the PC 200, the 200A, or the display apparatus 5A may be configured to display a character string using the first display format, instead of the second display format that has a larger character size, when the following conditions are satisfied: a difference between the character size for the second display format and the character size for the first display format is smaller than a predetermined threshold; and a line feed is inserted in the middle of a word in the second display format.

The embodiments disclosed herein are to be considered in all respects as illustrative, and not restrictive. The scope of the invention is indicated by the claims, rather than by the above description, and is intended to embrace all changes that come within the meaning and scope of equivalency of the claims.

### LIST OF REFERENCE NUMERALS

- 1: PLC
- 5: programmable display apparatus
- 201,501: CPU
- 251, 251A, 1551: storage unit
- 252, 1552: input receiving unit
- 253, 253A, 553, 1553: calculation unit
- 254: transmission unit
- 255, 1555: display unit
- 256: determination unit
- 505: touchscreen
- 506: communication interface
- 551: display
- 552: touchscreen panel
- 591, 592: character string
- 599: display frame
- 601, 602, 1301, 1302, 1303: screen
- 1311, 1312, 1313: display area
- 1350, 1361, 1362, 1363, 1364, 1365: object image
- 1360: window
- 1364: object
- 1554: selection unit
- 1556: communication processing unit
- D8: data table
- D9: display area information
- SYS: PLC system

## Claims

1. An information processing apparatus (200; 200A) communicably connected to a programmable display apparatus (5), the information processing apparatus (200; 200A) comprising:
a storage unit (251; 251A) configured to store a first character string and display area information indicating a size of a predetermined display area;
a calculation unit (253; 253A) configured to calculate, based on the display area information, a degree of visibility of characters for a case in which the first character string is displayed in the predetermined display area using a first display format, and a degree of visibility of the characters for a case in which the first character string is displayed in the predetermined display area using a second display format, the first display format displaying all of the characters in the same size in a single line, and the second display format displaying all of the characters in the same size in a plurality of lines; and
a transmission unit (254) configured to transmit, in association with one another, the first character string, the display area information, and first attribute information to the programmable display apparatus (5), the first attribute information being for displaying the first character string on the programmable display apparatus (5) using the one of the first display format and the second display format that has a higher degree of visibility.

2. The information processing apparatus (200; 200A) according to claim 1, wherein:
the degrees of visibility of the characters are character sizes, and
the first attribute information includes first size information indicating a character size calculated by the calculation unit (253; 253A).

3. The information processing apparatus (200; 200A) according to claim 2, wherein:
if the one of the first display format and the second display format that has the higher degree of visibility is the second display format, the first attribute information further includes position information designating a line feed position in the first character string.

4. The information processing apparatus (200; 200A) according to claim 2 or 3, wherein:
the first character string is composed of one or more words,
the one or more words are composed of one or more characters, and
the calculation unit (253; 253A) calculates a character size of the first character string for the second display format on a condition that a word composed of a plurality of characters is displayed in the same line.

5. The information processing apparatus (200; 200A) according to any one of claims 2 to 4, wherein:
the first character string is a character string in a first language,
the storage unit (251; 251A) further stores a second character string that is a translation of the first character string in a second language,
the calculation unit (253; 253A) further calculates, based on the display area information, a degree of visibility of characters for a case in which the second character string is displayed in the predetermined display area using the first display format, and a degree of visibility of the characters for a case in which the second character string is displayed in the predetermined display area using the second display format,
the transmission unit (254) further transmits the second character string and second attribute information to the programmable display apparatus (5) in correspondence with the display area information, the second attribute information being for displaying the second character string on the programmable display apparatus (5) using the one of the first display format and the second display format that has a higher degree of visibility,
the degrees of visibility of the characters are character sizes of the second character string, and
the second attribute information includes second size information indicating a character size of the second character string calculated by the calculation unit (253; 253A).

6. The information processing apparatus (200; 200A) according to claim 5, wherein
if the one of the first display format and the second display format that has the higher degree of visibility is the second display format, the second attribute information further includes position information designating a line feed position in the second character string.

7. The information processing apparatus (200; 200A) according to claim 5 or 6, wherein:
the second character string is composed of one or more words,
the one or more words are composed of one or more characters, and
the calculation unit (253; 253A) calculates a character size of the second character string for the second display format on a condition that a word composed of a plurality of characters is displayed in a single line.

8. The information processing apparatus (200A) according to any one of claims 5 to 7, wherein the storage unit (251A) further stores setting value information indicating an initial setting value of a character size of the second character string, the information processing apparatus (200A) further comprising:
a determination unit (256) configured to determine whether or not the second character string is displayable in a first display area using the first display format while the character size of the second character string is set to the initial setting value,
wherein if the determination unit (256) determines that the second character string is not displayable in the first display area, the calculation unit (253A) calculates, based on first display area information, a character size for a case in which the second character string is displayed in the first display area using the first display format, and a character size for a case in which the second character string is displayed in the first display area using the second display format.

9. The information processing apparatus (200; 200A) according to claim 1, wherein:
the first character string is composed of one or more words,
the one or more words are composed of one or more characters, and
the degrees of visibility of the characters are specified by a character size and by whether or not a line feed is inserted in a middle of a word.

10. An information processing apparatus (200; 200A) communicably connected to a programmable display apparatus (5), the information processing apparatus (200; 200A) comprising:
a storage unit (251; 251A) configured to store a predetermined character string and display area information indicating a size of a predetermined display area;
a calculation unit (253; 253A) configured to calculate, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in one column, and the second display format displaying all of the characters in the same size in a plurality of columns; and
a transmission unit (254) configured to transmit, in association with one another the predetermined character string, the display area information, and attribute information to the programmable display apparatus (5), the attribute information being for displaying the predetermined character string on the programmable display apparatus (5) using the one of the first display format and the second display format that has a higher degree of visibility.

11. A programmable display apparatus (5A) communicably connected to a programmable logic controller (1), the programmable display apparatus (5A) comprising:
a storage unit (1551) configured to store a predetermined character string and display area information indicating a size of a predetermined display area;
a calculation unit (1553) configured to calculate, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines;
a selection unit (1554) configured to select the one of the first display format and the second display format that has a higher degree of visibility of the characters; and
a display unit (1555) configured to display the predetermined character string inside the predetermined display area using the selected display format.

12. A programmable display apparatus (5A) communicably connected to a programmable logic controller (1), the programmable display apparatus (5A) comprising:
a storage unit (1551) configured to store a predetermined character string and display area information indicating a size of a predetermined display area;
a calculation unit (1553) configured to calculate, based on the display area information, a degree of visibility of characters for a case in which the predetermined character string is displayed in the predetermined display area using a first display format, and a degree of visibility of the characters for a case in which the predetermined character string is displayed in the predetermined display area using a second display format, the first display format displaying all of the characters in the same size in one column, and the second display format displaying all of the characters in the same size in a plurality of columns;
a selection unit (1554) configured to select the one of the first display format and the second display format that has a higher degree of visibility of the characters; and
a display unit (1555) configured to display the predetermined character string inside the predetermined display area using the selected display format.

13. A data processing method used in an information processing apparatus (200; 200A) communicably connected to a programmable display apparatus (5), the data processing method comprising:
a step of calculating, based on display area information indicating a size of a predetermined display area, a degree of visibility of characters for a case in which a predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; and
a step of transmitting, in association with one another, the predetermined character string, the display area information, and attribute information to the programmable display apparatus (5), the attribute information being for displaying the predetermined character string on the programmable display apparatus (5) using the one of the first display format and the second display format that has a higher degree of visibility.

14. A data processing method used in a programmable display apparatus (5A) communicably connected to a programmable logic controller (1), the data processing method comprising:
a step of calculating, based on display area information, a degree of visibility of characters for a case in which a predetermined character string is displayed in a predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines;
a step of selecting the one of the first display format and the second display format that has a higher degree of visibility of the characters; and
a step of displaying the predetermined character string inside the predetermined display area using the selected display format.

15. A program for controlling an information processing apparatus (200; 200A) communicably connected to a programmable display apparatus (5), the program causing a processor (201) of the information processing apparatus (200; 200A) to execute:
a step of calculating, based on display area information indicating a size of a predetermined display area, a degree of visibility of characters for a case in which a predetermined character string is displayed in the predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines; and
a step of transmitting, in association with one another, the predetermined character string, the display area information, and attribute information to the programmable display apparatus (5), the attribute information being for displaying the predetermined character string on the programmable display apparatus (5) using the one of the first display format and the second display format that has a higher degree of visibility.

16. A program for controlling a programmable display apparatus (5A) communicably connected to a programmable logic controller (1), the program causing a processor of the programmable display apparatus (5A) to execute:
a step of calculating, based on display area information, a degree of visibility of characters for a case in which a predetermined character string is displayed in a predetermined display area using a first display format, and a degree of visibility of the characters for a case in which the predetermined character string is displayed in the predetermined display area using a second display format, the first display format displaying all of the characters in the same size in a single line, and the second display format displaying all of the characters in the same size in a plurality of lines;
a step of selecting the one of the first display format and the second display format that offers a higher degree of visibility of the characters; and
a step of displaying the predetermined character string inside the predetermined display area using the selected display format.
